# EUROPEAN PATENT SPECIFICATION

(11) **EP 2 481 560 B1**
(45) Date of publication and mention of the grant of the patent: **03.04.2013**
(21) Application number: 11010063.3
(22) Date of filing: 21.12.2011
(51) Int. Cl.: B29D 30/38, B60C 9/04, D02G 3/48

(54) **Method for manufacturing pneumatic tire**
Verfahren zur Herstellung von pneumatischen Reifen
Procédé de fabrication de pneumatique

(30) Priority: 31.01.2011 JP 2011018745
(43) Date of publication of application: 01.08.2012
(73) Proprietor: Sumitomo Rubber Industries, Ltd., Hyogo-ken (JP)
(72) Inventor: Fukumoto, Toru, Hyogo 651-0072 (JP)
(74) Representative: Manitz, Finsterwald & Partner GbR

(56) References cited:
- EP-A1- 2 014 452
- EP-A1- 2 014 484
- WO-A1-2007/050061
- JP-A- 4 278 336
- US-A- 3 929 180
- US-A- 5 397 527
- US-A1- 2001 042 581
- US-A1- 2006 180 261
- US-A1- 2007 232 737

## Description

### Background of the invention

The present invention relates to a method for manufacturing a pneumatic tire in which the raw tire is built by the use of an uninflatable core mold in stead of a conventional inflatable bladder and expandable tire building drum.

In recent years, as part of countermeasures to global warming, there is urgent need to improve fuel consumption performance of automobiles. Therefore, tire manufacturers are strongly required to decrease the rolling resistance as well as the weight of a pneumatic tire.

As well known, a pneumatic tire is manufactured by building a raw tire and vulcanizing the raw tire in a mold. In general, the raw tire is built by applying various tire components onto an expandable tire building drum, and the built-up raw tire is put in a mold, and the inside of the tire is pressurized by inflating a bladder disposed inside the tire.

Thus, during manufacturing the raw tire, the air-impermeable inner liner covering the inner surface of the tire is often pressed against the adjacent carcass cords. Therefore, the inner liner has to have some degree of thickness to secure the required thickness covering the carcass cords.

In order to decrease the weight of the inner liner rubber, if the thickness of the inner liner is reduced, since the covering thickness is decreased, there is a possibility that the carcass cords are almost exposed and the air sealing effect is impaired. Further, there is a possibility of decreasing the tire durability. Accordingly, it is difficult to reduce the weight of the inner liner rubber.

EP 2 014 452 A1 discloses a method for manufacturing a pneumatic tire having a carcass ply of carcass cords rubberized with topping rubber and extending between the bead portions of the tire. The method comprises a raw tire building process for building a raw tire on a surface of an uninflatable core mold and a vulcanizing process for vulcanizing the raw tire built on the core mold. The carcass cords are rubberized with a raw topping rubber and the raw carcass ply is made by the use of the rubberized carcass cords. The carcass cords are made of polyethylene naphthalate or the like.

Further relevant prior art is disclosed in US 3,929,180 A, WO 2007/050061 A1 and US 2007/232737 A1.

### Summary of the Invention

It is therefore, an object of the present invention is to provide a method for manufacturing a pneumatic tire in which, the weight of the inner liner rubber can be decreased to reduce the weight of the tire, and even if the weight of the inner liner rubber is decreased, the above-mentioned problems with the exposure of the carcass cords, and the deterioration in the air sealing effect and the tire durability can be solved.

The manufacturing method according to the present invention is for a pneumatic tire comprising a carcass ply made of carcass cords rubberized with topping rubber and extending between bead portions of the tire. The method comprises
a raw tire building process for building a raw tire on an annular surface of an uninflatable core mold, and
a vulcanizing process for vulcanizing the raw tire built on the core mold by heating the raw tire together with the core mold, wherein
the raw tire building process comprises
rubberizing the carcass cords with the raw topping rubber, and
making the raw carcass ply by the use of the rubberized carcass cords,
the carcass cords are made of polyethylene terephthalate or alternatively polyethylene naphthalate,
the dry heat shrinkage percentage of the carcass cords before subjected to the vulcanizing process is 1 to 3 % at 180 degrees c, and
the Mooney viscosity of the raw topping rubber is 35 to 70 (ML1+4, 130deg.c).

In the present invention, during building and vulcanizing the raw tire, the core mold is used instead of the conventional expandable tire building drum and inflatable bladder. Accordingly, the inner liner rubber is not pressed against the carcass cords. Therefore, it becomes possible to decrease the thickness of the inner liner.

Even so, if the carcass cords are shrunken during vulcanization, in the tread portion and sidewall portions, the carcass cords move toward the inner liner and the inner liner penetrates between the carcass cords. As a result, the inner surface of the finished tire is liable to undulate along the surfaces of the carcass cords because of the thin inner liner. In the finished tire, if the inner liner is thin and undulated, cracks are liable to occur in the undulated area during use.

In the present invention, therefore, the carcass cords having a very small heat shrinkage percentage is used. As a result, the movement of the carcass cords toward the core mold due to heat shrinkage during vulcanization can be avoided. Further, owing to the specifically limited Mooney viscosity value, the raw topping rubber during vulcanization becomes hard to flow, and thereby, the inner liner rubber becomes hard to penetrate between the carcass cords.

Thus, even if the thickness of the inner liner is reduced, the undulation and resultant cracks can be effectively prevented, and the durability can be improved. Further, the topping rubber and the inner liner rubber can maintain their required thicknesses, therefore the problems with the exposure of the carcass cords, and the deterioration in the air sealing effect and the tire durability can be solved.

In the present invention, further, the low-cost polyethylene terephthalate or polyethylene naphthalate cords are used as the carcass cords, and further it is not necessary to use high-cost electron beam irradiation to reduce the flow of topping rubber, therefore, the production cost can be reduced.

### Brief Description of the Drawings

Fig.1 is a cross sectional view of a pneumatic tire manufactured by a method according to an embodiment of the present invention.
Fig.2 is an enlarged schematic cross sectional view of a carcass ply.
Fig.3 is a cross sectional view of the raw tire built on a core mold.
Fig.4 is a perspective view for explaining a step of applying the raw carcass ply onto the annular surface of the core mold.
Fig.5 is a cross sectional view for explaining the vulcanizing process.

### Description of the Preferred Embodiments

Taking a passenger radial tire as an example, embodiments of the present invention will now be described in detail in conjunction with the accompanying drawings.

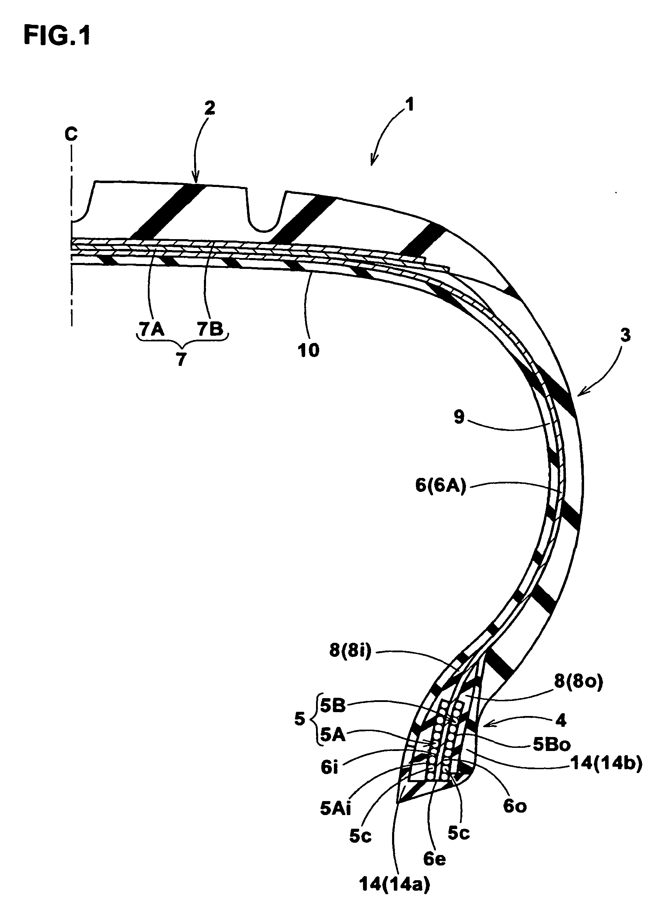

As shown in Fig.1, pneumatic tire 1 to be manufactured by the method according to the present invention comprises a tread portion 2, a pair of sidewall portions 3, a pair of bead portions 4 with a bead core 5 therein, a carcass 6 extending between the bead portions, a belt 7 disposed radially outside the carcass 6 in the tread portion 2, and an inner liner 9 disposed inside the carcass 6 so as to form the substantially entire inner surface 10 of the tire.

The carcass 6 is composed of at least one ply 6A (in this example only one ply 6A) of carcass cords 11 arranged radially at an angle of 75 to 90 degrees with respect to the tire equator C, and extending between the bead portions 4 through the tread portion 2 and the sidewall portions 3, and the ply edges 6e are respectively terminated in the bead portion 4 without being turned back. In the or each carcass ply 6A, the both sides of the array 12 of the carcass cords 11 are covered with topping rubber 13.

The bead core 5 in this example is composed of an axially inner bead core 5A and an axially outer bead core 5B and the edge 6e of the carcass ply 6A is secured therebetween.

The axially inner bead core 5A and axially outer bead core 5B are each formed by compactly spirally winding a bead wire 5c, abutting on the axial inner surface 6i and axial outer surface 6o of the carcass ply, respectively.

Preferably used as the bead wire 5c is a steel cord made of high strength steel filaments twisted together.

The belt 7 is composed of at least two plies (in this embodiment only two cross plies 7A and 7B) of belt cords laid at an angle of from 10 to 40 degrees with respect to the tire equator C. In this embodiment, steel cords are used as the belt cords. But, it is also possible to use high modulus organic fiber cords, e.g. aramid, rayon and the like as required.

The inner liner 9 is disposed on the inside of the carcass 6 so as to cover the substantially entirety of the inner surface 10 of the tire. The inner liner 9 is made of air impermeable butyl rubber for example, containing at least 50 parts by weight of halogenated butyl rubber with respect to 100 parts by weight rubber.

In the bead portion 4, a bead apex 8 made of hard rubber and a chafer rubber 14 are disposed.

The bead apex 8 comprises an inner apex rubber 8i disposed on the axial inner surface 5Ai of the axially inner bead core 5A, and an outer apex rubber 8o disposed on the axially outer surface 5_{Bo} of the axially outer bead core 5B. Each apex rubber 8i,8o extends radially outwardly beyond the radially outer end of the bead core 5A,5B and tapers to its radially outer end. Such apex rubber 8i and 8o increases the bending rigidity of the bead portion 4 and helps to improve the steering stability.

The chafer rubber 14 comprises a base part 14a disposed on the radially inside of the axially inner bead core 5A and axially outer bead core 5B, and an axially outer part 14b disposed axially outside the axially outer bead core 5B in order to prevent rim chafing.

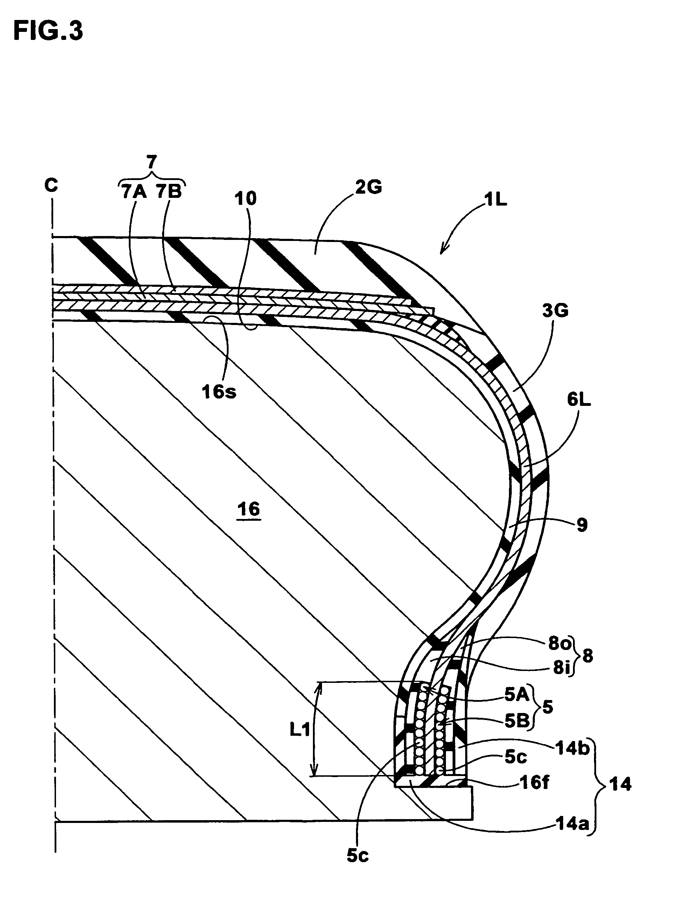

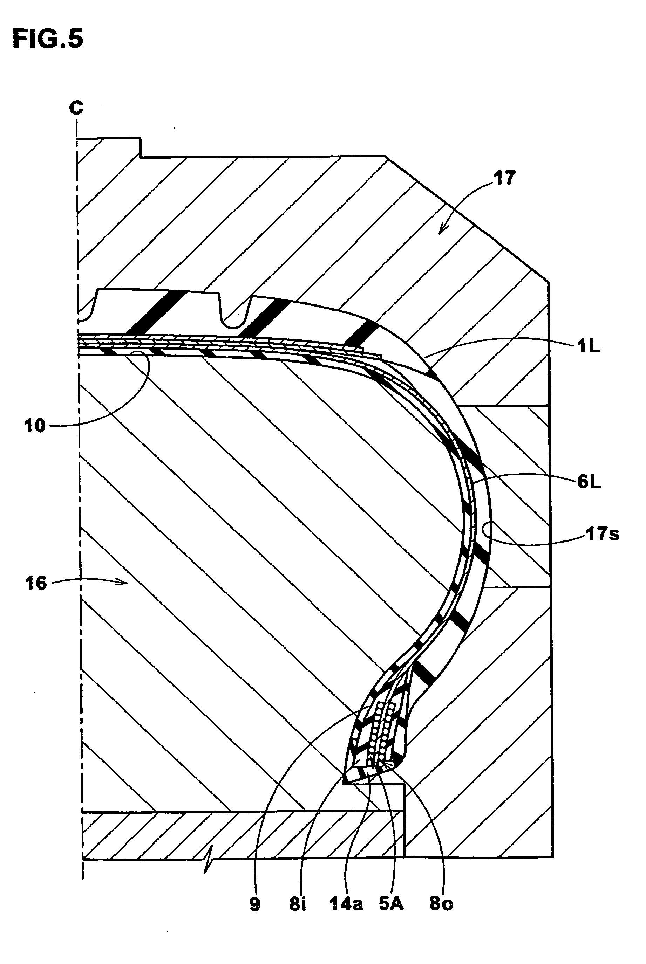

In order to manufacture the above described tire 1, a raw tire 1L is built on a core mold 16 as shown in Fig.3. Then, as shown in Fig.5, together with the core mold 16, the raw tire 1L built on the core mold 16 is put in a vulcanizing mold 17 provided with an inner surface 17s for shaping the outer surface of the raw tire 1L, and the raw tire 1L is vulcanized by applying heat.

In this embodiment, the core mold 16 is provided with
a circumference surface 16s having the substantially same profile as that of the inner surface of the tire under 5 % pressure state, and
a pair of flange surfaces 16f extending axial outwardly from the radially inner ends of the circumference surface 16s. The core mold 16 is a sprit mold made up of a plurality of pieces which are for example divided in the circumferential direction. The core mold 16 is made of a metal material, e.g. duralumin or the like which can endure heat and pressure during vulcanization.

Here the "5 % pressure state" is such that the tire mounted on a standard wheel rim is once inflated to the standard pressure with no tire load, and then the pressure is decreased down to 5 % of the standard pressure.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load Capacity" in ETRTO, the maximum value given in the above-mentioned table in TRA or the like.

During building and vulcanizing the tire, the core mold does not expand differently from the bladder and tire building drum, therefore, the inner surface 10 of the tire can be supported steady with an even pressure distribution, and the thickness variations and the carcass cords' dislocation can be avoided.

Further, the expansion of the raw tire during building and the stretch of the raw tire during vulcanization are decreased or become almost zero, therefore, the carcass cords 11 are prevented from penetrating into the inner liner rubber 9. Thus, the decrease in the covering thickness of the topping rubber and inner liner rubber can be prevented. Accordingly, the exposure of the carcass cords, and the deterioration in the air sealing effect and the tire durability can be avoided.

The process for building the raw tire comprises
making the raw carcass ply 6L by rubberizing parallel carcass cords 11 with raw topping rubber 13L (hereinafter, the "raw carcass ply making step"), and
applying raw tire components including the raw carcass ply 6L onto the circumference surface 16s of the core mold 16 (hereinafter, the "applying step").

Here, the term "raw" means conditions not completely vulcanized. Thus, so called semivulcanized condition is included.

In the raw carcass ply making step, the both sides of the array 12 of the carcass cords 11 are covered with the raw topping rubber 13L, and the raw carcass ply 6L is made. For example, the raw topping rubber 13 is extruded from a twinscrew continuous-kneading extruder as two strips. The array 12 is sandwiched between the two strips and rolled. The boundary between the rolled two strips is substantially positioned at the center line of the array 12 of the carcass cords 11.

The carcass cords 11 are made from polyethylene terephthalate or polyethylene naphthalate, and the dry heat shrinkage percentage of the carcass cord before subjected to the vulcanizing process is set in a range of not more than 3.0 %, preferably not more than 2.5 %, more preferably not more than 2.0 %, but not less than 1.0 %, preferably not less than 1.1 %, more preferably not less than 1.2 %.

The dry heat shrinkage percentage can be set in the above range by changing the material (polyethylene terephthalate or polyethylene naphthalate), the twist structure of the cord, the conditions of dipping treatment for the cord and the like.

As specified in the Japanese Industrial Standard JIS L1017, the dry heat shrinkage percentage is given by the ratio (y/x) in % of the shrinkage y of the cord when the cord with no load is subjected to a temperature of 180 deg.c for 30 minutes to the original length x of the cord.

If the dry heat shrinkage percentage is more than 3 %, then due to the heat shrinkage during vulcanization, the carcass cords 11 thrust into the inner liner 9, therefore, it becomes difficult to maintain the required minimum covering thickness. In addition, polyethylene terephthalate and polyethylene naphthalate are low-cost in comparison with aramid, therefore, the increase in the production cost can be avoided.

The Mooney viscosity of the raw topping rubber 13L is set in a range of not less than 35 (ML1+4, 130deg.c), preferably not less than 36 (ML1+4, 130deg.c), more preferably not less than 37 (ML1+4, 130deg.C), but not more than 70 (ML1+4, 130deg.c), preferably not more than 65 (ML1+4, 130deg.C). Namely, the value of the Mooney viscosity is larger than the values of the conventional raw topping rubber.

The Mooney viscosity can be set in the above range by changing the conditions for kneading the rubber, the blending quantities of additives. e.g. carbon black and the like,

The Mooney viscosity is measured according to Mooney viscosity test specified in JIS K6300 "Rubber, unvulcanizedPhysical property" wherein the unvulcanized rubber is preheated at 130 degrees c for one minute and an L-shaped rotor put therein is rotated for four minutes, then the Mooney viscosity is measured.

The rubber flow of such raw topping rubber 13L during vulcanization becomes less in comparison with usually used raw topping rubber. Accordingly, the plasticized inner liner rubber is prevented from flowing out between the carcass cords 11, and the thinning of the inner liner is prevented. Therefore, even if the thickness of the inner liner is decreased to the required minimum value, the minimum value can be maintained till after the vulcanization. In addition, such raw topping rubber 13L eliminates the need for electron beam irradiation process often employed to lessen the flow of raw topping rubber. Thus, it is possible to save the plant cost and production cost.

If the Mooney viscosity of the raw topping rubber 13L is less than 35 (ML1+4, 130deg.c), it becomes difficult to effectively reduce the rubber flow. If the Mooney viscosity is more than 70 (ML1+4, 130deg.c), during coating the carcass cords 11 with the raw topping rubber 13L, the heat generation increases, and degradation of the rubber occurs.

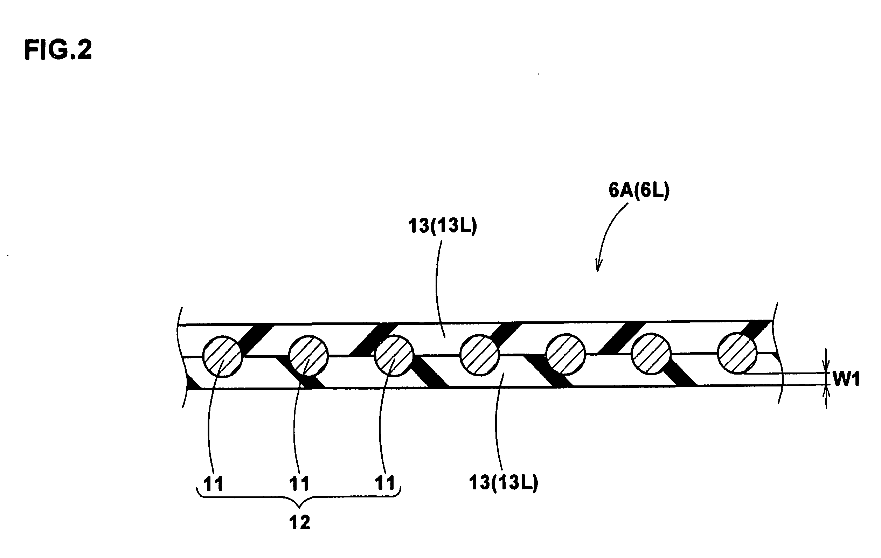

If the minimum covering thickness w1 of the raw topping rubber 13L from the carcass cords 11 is too small, there is a possibility that the plasticized inner liner rubber tends to flow out between the carcass cords 11, and the exposure of the carcass cords can not fully prevented. If the minimum covering thickness w1 is too large, then the rubber flow becomes insufficient, and defective molding is liable to occur. Therefore, as shown in Fig.2, the minimum covering thickness w1 of the raw topping rubber 13L is preferably set in a range of not less than 0.10 mm, more preferably not less than 0.13 mm, but not more than 0.30 mm, more preferably not more than 0.25 mm.

In the applying step, as shown in Fig.3, the chafer rubber 14, inner liner 9, raw carcass ply 6L, bead core 5, apex rubber 8, sidewall rubber 3G, belt 7, and tread rubber 2G are applied to the circumference surface 16s of the core mold 16.

First, the base part 14a of the chafer rubber 14 and the inner liner 9 are applied to the circumference surface 16s of the core mold 16. Then, the inner apex rubber 8i is applied to the axially outside thereof. More specifically, the base part 14a of the chafer rubber 14 is wound around the flange surface 16f of the core mold 16.

The inner liner 9 is formed by circumferentially winding a rubber tape (not shown) on the circumference surface 16s of the core mold 16 a large number of times with no gap between the windings. The rubber tape is made of unvulcanized rubber and has a width of about 5 to 35 mm and a thickness of about 0.5 to 2.0 mm. In view of the weight reduction, the thickness of the formed inner liner 9 is preferably less than 1.0 mm, more preferably 0.7 mm.

Next, the axially inner bead core 5A is formed axially outside the inner apex rubber 8i. Then, the raw carcass ply 6L is applied to the outside of the axially inner bead core 5A and inner liner 9.

The axially inner bead core 5A is formed by compactly spirally winding one bead wire 5c, starting from the radially outside of the base part 14a of the chafer rubber 14 toward the radially outside.

If the dimension L1 of the axially inner bead core 5A measured radially along the raw carcass ply 6L is too small, it is difficult to secure the carcass ply. Therefore, the dimension L1 is preferably not less than 8 mm, more preferably not less than 10 mm. If the dimension L1 is too large, the weight of the tire is unfavorably increased. From this standpoint, the dimension L1 is preferably not more than 25 mm, more preferably not more than 20 mm.

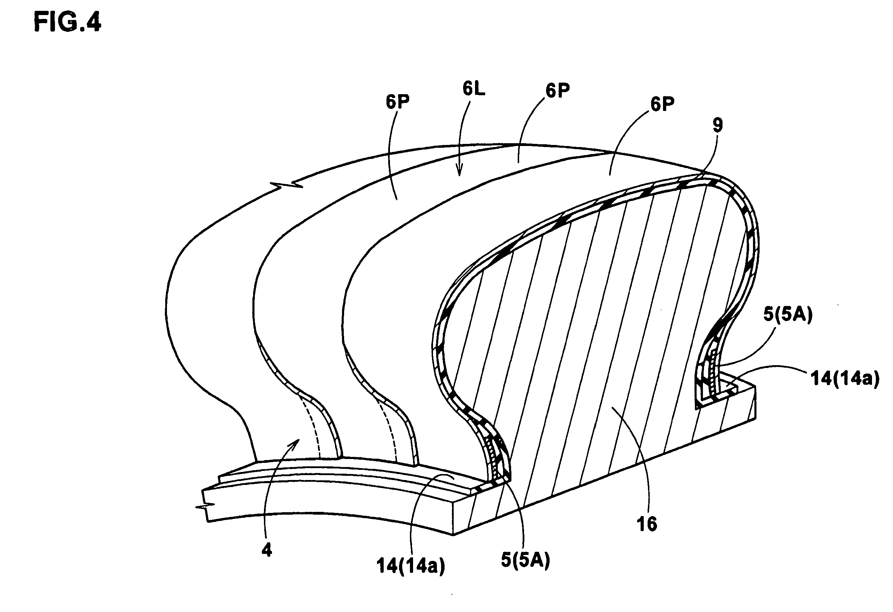

In this embodiment as shown in Fig.4, the raw carcass ply 6L is formed by applying a plurality of narrow-width cut strips 6P side by side around the core mold 16 with no gap therebetween.

Each strip 6P has a substantially constant width and extends from one of the bead cores to the other. Therefore, in the tread portion and sidewall portions, the edges of the strips 6P are butted. But, in the bead portions, the adjacent edges are partly overlapped with each other to absorb the difference in the circumferential length.

On the axially outside of the raw carcass ply 6L, as shown in Fig.3, the axially outer bead core 5B, the outer apex rubber 8o, and the axially outer part 14b of the chafer rubber 14 are applied in sequence.

Similarly to the axially inner bead core 5A, the axially outer bead core 5B is formed by compactly spirally winding one bead wire 5c, starting from the base part 14a of the chafer rubber 14 toward the radially outside, along the axially outer surface of the raw carcass ply 6L.

The outer apex rubber 8o is disposed on the axially outside thereof.

Further, the axially outer part 14b is disposed on the axially outside thereof, and the radially inner edge of the axially outer part 14b is connected to the base part 14a. Further, the sidewall rubber 3G, the belt 7, the tread rubber 2G and the like are applied.

Thereby, the raw tire 1L is formed on the core mold 16.

In the vulcanizing process, as shown in Fig.5, the raw tire 1L together with the core mold 16 is put in the vulcanizing mold 17 or covered with the vulcanizing mold 17. Then, the raw tire 1L is vulcanized, and the tire 1 is manufactured.

### Comparison Tests

Passenger car radial tires of size 195/65R15 having the structure shown in Fig.1 were manufactured by the method according to the present invention using the core mold, and a conventional method using a bladder (Ref.6). The specifications are shown in Table 1.

In the manufacturing method using the core mold, the narrow-width cut strip 6P for forming the carcass ply had a width of 20 mm, and in the strip, twenty carcass cords were embedded along the length thereof in parallel with each other.

As to the carcass cords, "DSP" manufactured by Performance fiber company Limited was used as the polyethylene terephthalate (PET) cord, and "PenTec" manufactured by Performance fiber company Limited was used as the polyethylene naphthalate (PEN) cord.

As to the topping rubber for the carcass cords, compositions shown in Table 1 were used.

The tires were tested for the durability. In the test, the tire mounted on a standard rim (size: 15X6JJ) and inflated to 200 kPa was run for 3000 km at a speed of 80 km/h under a tire load of 7 kN by the use of a tire test drum of 1.7 m diameter. Thereafter, the inner surface of the tire was checked for the number of cracks. The test results are indicated in Table 2 by index based on comparative tire Ref.1 being 100. The larger the value, the better the durability.

Through the test, it was confirmed that the manufacturing method according to the present invention can produce a pneumatic tire having the improved durability even if the thickness of the inner liner is reduced.

**TABLE 1**

| | (parts by mass) | | | | |
|---|---|---|---|---|---|
| composition No. | 1 | 2 | 3 | 4 | 5 |
| NR | 70 | 70 | 70 | 70 | 70 |
| SBR | 30 | 30 | 30 | 30 | 30 |
| N326 | 45 | 35 | 40 | 62 | 72 |
| process oil | 5 | 5 | 5 | 5 | 5 |
| stearic acid | 2 | 2 | 2 | 2 | 2 |
| hydrozincite | 5 | 5 | 5 | 5 | 5 |
| sulfur | 3 | 3 | 3 | 3 | 3 |
| vulcanization accelerator | 1 | 1 | 1 | 1 | 1 |

| | | | | | |
|---|---|---|---|---|---|
| NR: natural rubber RSS#3 SBR: styrene butadiene rubber SBR1502 (Sumitomo chemical Co., Ltd.) N326: carbon black N326 (Showa Cabot Corp.) process oil: PS32 Diana process oil (Idemitsu Kosan Co., Ltd.) vulcanization accelerator: Nocceler NS (N-tert-butyl-2-benzothiazolesulfenamide) (Ouchi Shinko chemical Industrial co., Ltd) | | | | | |

**TABLE 2**

| | | Ref.1 | Ref.2 | Ref.3 | Ref.4 | Ref.5 | Ref.6 | Ref.7 |
|---|---|---|---|---|---|---|---|---|
| Method | | core | core | core | core | core | bladder | core |
| Carcass cords | | | | | | | | |
| | material | PET | PET | PET | PET | PEN | PET | aramid |
| | structure (dtex/2) | 1670 | 1670 | 1670 | 1100 | 1670 | 1670 | 1670 |
| | dry heat shrinkage (%) | 4.0 | 3.5 | 2.0 | 4.0 | 4.0 | 2.0 | 0.0 |

| Topping rubber | | | | | | | | |
|---|---|---|---|---|---|---|---|---|
| | composition No. | 1 | 1 | 2 | 1 | 1 | 1 | 1 |
| | Mooney viscosity (ML1+4,130deg.C) | 40 | 40 | 30 | 40 | 40 | 40 | 40 |
| | minimum covering thickness W1(mm) | 0.17 | 0.17 | 0.17 | 0.17 | 0.17 | 0.17 | 0.17 |
| Dimension L1 (mm) | | 15 | 15 | 15 | 15 | 15 | 15 | 15 |
| Durability | | 100 | 101 | 101 | 100 | 100 | 101 | 107 |
| | | | | | | | | |

| | | Ex.1 | Ex.2 | Ex.3 | Ex.4 | Ex.5 | Ex.6 | Ex.7 |
|---|---|---|---|---|---|---|---|---|
| Method | | core | core | core | core | core | core | core |
| Carcass cords | | | | | | | | |
| | material | PET | PET | PET | PET | PET | PET | PET |
| | structure (dtex/2) | 1670 | 1670 | 1670 | 1670 | 1670 | 1670 | 1100 |
| | dry heat shrinkage (%) | 1.5 | 2.0 | 2.5 | 3.0 | 2.0 | 2.0 | 2.0 |

| Topping rubber | | | | | | | | |
|---|---|---|---|---|---|---|---|---|
| | composition No. | 1 | 1 | 1 | 1 | 3 | 4 | 1 |
| | Mooney viscosity (ML1+4,130deg.C) | 40 | 40 | 40 | 40 | 35 | 60 | 40 |
| | minimum covering thickness W1(mm) | 0.17 | 0.17 | 0.17 | 0.17 | 0.17 | 0.17 | 0.17 |
| Dimension L1(mm) | | 15 | 15 | 15 | 15 | 15 | 15 | 15 |
| Durability | | 108 | 105 | 103 | 102 | 102 | 109 | 105 |
| | | | | | | | | |

| | | Ex.8 | Ex.9 | Ex.10 | Ex.11 | Ex.12 | Ex.13 | Ex.14 |
|---|---|---|---|---|---|---|---|---|
| Method | | core | core | core | core | core | core | core |
| Carcass cords | | | | | | | | |
| | material | PEN | PET | PET | PET | PET | PET | PET |
| | structure (dtex/2) | 1670 | 1670 | 1670 | 1670 | 1670 | 1670 | 1670 |
| | dry heat shrinkage (%) | 2.0 | 2.0 | 2.0 | 2.0 | 2.0 | 2.0 | 2.0 |

| Topping rubber | | | | | | | | |
|---|---|---|---|---|---|---|---|---|
| | composition No. | 1 | 5 | 1 | 1 | 1 | 1 | 1 |
| | Mooney viscosity (ML1+4,130deg.C) | 40 | 70 | 40 | 40 | 40 | 40 | 40 |
| | minimum covering thickness W1(mm) | 0.17 | 0.17 | 0.10 | 0.30 | 0.17 | 0.17 | 0.17 |
| Dimension L1(mm) | | 15 | 15 | 15 | 15 | 0 | 8 | 25 |
| Durability | | 105 | 111 | 102 | 109 | 102 | 103 | 106 |

## Claims

1. A method for manufacturing a pneumatic tire (1) having a carcass ply (6A) of carcass cords (11) rubberized with topping rubber (13) and extending between bead portions (4) of the tire (1), comprising
a raw tire building process for building a raw tire (1L) on an annular surface of an uninflatable core mold (16), and
a vulcanizing process for vulcanizing the raw tire built on the core mold (16) by heating the raw tire (1L) together with the core mold (16),
the raw tire building process comprising
rubberizing the carcass cords (11) with the raw topping rubber (13L), and
making the raw carcass ply (6L) by the use of the rubberized carcass cords (11), wherein
the carcass cords (11) are made of polyethylene terephthalate or alternative polyethylene naphthalate,
before subjected to the vulcanizing process, the dry heat shrinkage percentage of the carcass cords (11) is 1 to 3%, wherein the dry heat shrinkage percentage is given by the ratio y/x in % of the shrinkage y of the cord when the cord with no load is subjected to a temperature of 180 degrees C for 30 minutes to the length x of the cord, and
the Mooney viscosity of the raw topping rubber (13L) is 35 to 70 (ML1+4, 130deg.C.).

2. The method according to claim 1, wherein
the raw tire building process comprises
making an inner liner (9) by circumferentially winding a rubber tape on the circumference surface (16s) of the core mold (16) a large number of times with no gap between the windings of the rubber tape, wherein
the rubber tape is made of unvulcanised rubber and has a width of about 5 to 35 mm and a thickness of about 0.5 to 2.0 mm.

3. The method according to claim 2, wherein
in the raw tire building process, the raw carcass ply (6L) is formed outside the inner liner (9) by applying a plurality of narrow-width cut strips (6P) side by side around the core mold (16) so that the narrow-width cut strips extend from one of the bead portions (4) to the other, wherein the narrow-width cut strip (6P) has a substantially constant width, and in the narrow-width cut strip (6P), some of the carcass cords are embedded in the topping rubber.

4. The method according to claim 1, wherein
in each of the bead portions, the edge of the raw carcass ply (6L) is not turned back, and is secured between an axially outer bead core (5B) and an axially inner bead core (5A), and
the raw tire building process further comprises making the axially outer bead core (5B) and axillary inner bead core (5A) by spirally winding bead wires.

## Patentansprüche

1. Verfahren zum Herstellen eines Luftreifens (1), der eine Karkasslage (6A) aus Karkasskorden (11) aufweist, die mit Gummierungskautschuk (13) gummiert sind, und sich zwischen Wulstabschnitten (4) des Reifens (1) erstreckt, umfassend:
einem Rohreifen-Aufbauprozess zum Aufbauen eines Rohreifens (1L) auf einer ringförmigen Oberfläche einer nicht aufblähbaren Kernform (16), und
einen Vulkanisierungsprozess zum Vulkanisieren des auf der Kernform (16) aufgebauten Rohreifens durch Erwärmen des Rohreifens (1L) zusammen mit der Kernform (16),
wobei der Rohreifen-Aufbauprozess umfasst
Gummieren der Karkasskorde (11) mit dem Rohgummierungskautschuk (13L), und
Herstellen der Rohkarkasslage (6L) unter Verwendung der gummierten Karkasskorde (11), wobei
die Karkasskorde (11) aus Polyethylenterephthalat oder alternativ Polyethylennaphthalat hergestellt werden,
bevor sie dem Vulkanisierungsprozess unterzogen werden, der Schrumpfungsprozentsatz bei trockener Wärme der Karkasskorde (11) 1 bis 3 % beträgt, wobei der Schrumpfungsprozentsatz bei trockener Wärme durch das Verhältnis x/y in % der Schrumpfung y des Kords, wenn der Kord unbelastet 30 Minuten lang einer Temperatur von 180 Grad C ausgesetzt wird, zu der Länge x des Kords angegeben ist, und
die Mooney-Viskosität des Rohgummierungskautschuks (13L) 35 bis 70 (ML1+4, 130°C) beträgt.

2. Verfahren nach Anspruch 1, wobei:
der Rohreifen-Aufbauprozess umfasst
Herstellen eines Innerliners (9) durch Wickeln eines Kautschukbandes in Umfangsrichtung auf die Umfangsoberfläche (16s) der Kernform (16) eine große Anzahl Male ohne Lücke zwischen den Wicklungen des Kautschukbandes, wobei
das Kautschukband aus nicht vulkanisiertem Kautschuk hergestellt wird und eine Breite von etwa 5 bis 35 mm und eine Dicke von etwa 0,5 bis 2,0 mm aufweist.

3. Verfahren nach Anspruch 2, wobei
in dem Rohreifen-Aufbauprozess die Rohkarkasslage (6L) außerhalb des Innerliners (9) gebildet wird, indem eine Vielzahl von geschnittenen Streifen (6P) schmaler Breite nebeneinander um die Kernform (16) herum aufgelegt wird, so dass die geschnittenen Streifen schmaler Breite sich von einem der Wulstabschnitte (4) zu dem anderen erstrecken, wobei die geschnittenen Streifen schmaler Breite (6P) eine im Wesentlichen konstante Breite aufweist, und in dem geschnittenen Streifen schmaler Breite (6P) einige der Karkasskorde in den Gummierungskautschuk eingebettet werden.

4. Verfahren nach Anspruch 1, wobei
in jedem der Wulstabschnitte der Rand der Rohkarkasslage (6L) nicht zurückgeschlagen wird und zwischen einem axial äußeren Wulstkern (5B) und einem axial inneren Wulstkern (5A) befestigt wird, und
der Rohreifenaufbauprozess ferner das Herstellen des axial äußeren Wulstkerns (5B) und des axial inneren Wulstkerns (5A) durch spiralförmiges Wickeln von Wulstdrähten umfasst.

## Revendications

1. Procédé pour la fabrication d'un bandage pneumatique (1) ayant une nappe de carcasse (6A) composée de câblés de carcasse (11) caoutchoutés avec un caoutchouc d'enrobage (13) et s'étendant entre des portions de talons (4) du pneumatique (1), comprenant un processus de constitution d'un pneumatique cru pour constituer un pneumatique cru (1L) sur une surface annulaire d'un moule-noyau non gonflable (16), et
un processus de vulcanisation pour vulcaniser le pneumatique cru constitué sur le moule-noyau (16) en chauffant le pneumatique cru (1L) conjointement avec le moule-noyau (16),
le processus de constitution du pneumatique cru comprenant les étapes consistant à :
caoutchouter les câblés de carcasse (11) avec le caoutchouc d'enrobage cru (13L), et
réaliser la nappe de carcasse crue (6L) en utilisant les câblés de carcasse caoutchoutés (11), dans lequel
les câblés de carcasse (11) sont en polyéthylène téréphtalate ou en variante en polyéthylène naphthalate,
avant d'être soumis au processus de vulcanisation, le pourcentage de rétraction par chauffage à sec des câblés de carcasse (11) est de 1 à 3 %, ledit pourcentage de rétraction par chauffage à sec étant donné par le rapport y/x en % de la rétraction y du câblé quand le câblé n'est soumis à aucune charge sous une température de 180° C pendant 30 minutes sur la longueur x du câblé, et
la viscosité de Mooney du caoutchouc d'enrobage cru (13L) est de 35 à 70 (ML1+4, 130° C).

2. Procédé selon la revendication 1, dans lequel
le processus de constitution du pneumatique cru comprend
la réalisation d'un doublage intérieur (9) en enroulant circonférentiellement un ruban en caoutchouc sur la surface circonférentielle (16s) du moule-noyau (16) un grand nombre de fois sans intervalle entre les enroulements du ruban en caoutchouc, dans lequel
le ruban en caoutchouc est fait de caoutchouc non vulcanisé et possède une largeur d'environ 5 à 35 mm et une épaisseur d'environ 0,5 à 2,0 mm.

3. Procédé selon la revendication 2, dans lequel
dans le processus de constitution du pneumatique cru, la nappe de carcasse crue (6L) est formée à l'extérieur du doublage intérieur (9) en appliquant une pluralité de bandelettes découpées de faible largeur (6P) côte à côte autour du moule-noyau (16), de sorte que les bandelettes découpées de faible largeur s'étendent depuis l'une des portions de talons (4) jusqu'à l'autre, les bandelettes découpées de faible largeur (6P) ayant une largeur sensiblement constante, et dans les bandelettes découpées de faible largeur (6P), certains des câblés de carcasse sont noyés dans le caoutchouc d'enrobage.

4. Procédé selon la revendication 1, dans lequel
dans chacune des portions de talons, la bordure de la nappe de carcasse crue (6L) n'est pas rabattue, et est bloquée entre une âme de talon axialement extérieure (5B) et une âme de talon axialement intérieure (5A), et
le processus de constitution du pneumatique cru comprend encore de réaliser l'âme de talon axialement extérieure (5B) et l'âme de talon axialement intérieure (5A) en enroulant en spirale des fils de talons.
